# EUROPEAN PATENT SPECIFICATION

(11) **EP 1 898 587 B1**
(45) Date of publication and mention of the grant of the patent: **29.06.2016**
(21) Application number: 06291436.1
(22) Date of filing: 08.09.2006
(51) Int. Cl.: H04L 29/06

(54) **A method of requesting an option to be used in a tunnel type**
Verfahren zum Anfordern einer Option, die in einem Tunneltyp benutzt werden soll
Procédé pour demander une option à utiliser dans un type de tunnel

(43) Date of publication of application: 12.03.2008
(73) Proprietor: ALCATEL LUCENT, 92100 Boulogne-Billancourt (FR)
(72) Inventor: De Juan Huarte, Federico, 75014 Paris (FR); Conte, Alberto, 75014 Paris (FR)
(74) Representative: Wetzel, Emmanuelle

(56) References cited:
- US-A1- 2004 148 428
- US-A1- 2006 045 049
- PERKINS C ET AL: "IP Mobility Support for IPv4, revised" IETF STANDARD-WORKING-DRAFT, INTERNET ENGINEERING TASK FORCE, IETF, CH, vol. mip4, no. 2, 20 October 2005 (2005-10-20), XP015042522 ISSN: 0000-0004

## Description

### Field of the invention

The invention relates to a method of requesting an option to be used in a tunnel type for tunneling IP-datagrams in a communications network from a home agent to a point of attachment of a mobile node. In other aspects the invention relates to a communications network, to a communications network component, to a home agent, and to computer program products that are adapted to perform the method in accordance with the invention.

### Background and related art

The mobile internet protocol standard, also referred to as mobile-IP or as MIP, is an internet engineering taskforce (IETF) standard communications protocol that is designed to allow mobile device users to move from one network to another network while maintaining their permanent IP addresses. Mobile-IP is described in IETF RFC 3344 and RFC 2002.

In the mobile internet protocol standard, a mobile device is referred to as a mobile node (MN). A mobile node is a node in an IP network that is able to change its access point to the internet by use of mobile-IP. A mobile node keeps always his IP address (also referred to as primary IP address) and is able to communicate uninterruptedly to the internet as long as a connection is established on layer 2. A mobile node must not necessarily be a laptop or mobile station; a mobile node can for example also be an IP router onboard of an aircraft.

A home network of a mobile node is the (sub) network with which the mobile node is associated according to the IP address of the mobile node. When the mobile node is located in the home network, then support via mobile-IP is not necessary.

A foreign network (also called visited network) is the actual (sub) network in which the mobile node resides when the mobile node is not located in the home network. In the foreign network, mobile-IP support of the mobile node is required. A foreign agent of the foreign network provides services to the mobile node when it is located in the corresponding foreign network. In view of the internet protocol, the so called care of address (COA) specifies the actual location of the mobile node. The mobile node is addressable in the foreign network via its care of address which is given to the mobile node by the foreign network. The care of address is therefore also sometimes referred to as secondary IP address of the mobile node. The above mentioned care of address can be hosted by the foreign agent or can be hosted by the mobile node itself. The secondary IP address in the latter case (care of address hosted by the mobile node), is also referred to as co-located care of address. In the other case, that is when the care of address is hosted by the foreign agent, the care of address is an IP address of the foreign agent.

A home agent (HA) of the home network also provides services to the mobile node. The home agent maintains a database in which the home agent keeps track of the care of addresses of all mobile nodes associated with the home agent (mobility binding). Thus the database provides mappings of the actual care of addresses to the primary addresses of mobile nodes that are associated with the home agent.

A correspondent node (CN) sends data packets which are further also denoted as Internet Protocol (IP)-datagrams to the primary IP address of the mobile node. The data packets are received by the home agent of the mobile node. The home agent is able to identify the care of address of the mobile node by use of the above mentioned database. The data packets are tunneled from the home agent to the point of attachment. The point of attachment refers to the network node which hosts the care of address. As already outlined above, this can either be done by the mobile node directly or the foreign agent. Therefore, the foreign agent is the end point and the home agent is the starting point of the tunnel when the care of address of the mobile node is hosted by the foreign agent. When the care of address is co-located with the mobile node, then the mobile node itself is the end point of the tunnel. From a logical point of view, a tunnel is a (secured) channel for data packets between the starting and the end point. Tunnelled IP-datagrams are encapsulated at the starting point of the tunnel and decapsulated at the end point of the tunnel. When the end point of the tunnel is given by the foreign agent, the IP-datagrams are further processed as given in the mobile-IP standard from the foreign agent to the mobile node.

According to the actual standard, several tunnel types that refer to different ways of encapsulating data are available. When the mobile node has received a care of address from the foreign network it has to register its care of address at its home agent so that the home agent is able to update the above mentioned database. In order to register its care of address, the mobile node sends a registration request message to the home agent by which the mobile node provides its care of address to the home agent. The care of address of the mobile node remains in the database only for a certain amount of time. Thus, the registration request message is not only sent after reception of the care of address, but regularly in order to keep the database updated. The mobile node specifies also in the registration request message which of the tunnel types provided by the mobile-IP standard should be used for tunneling data packets destined for the mobile node from the tunnel starting point to the end point.

The tunnel technologies, that are specified in the mobile-IP standard provide advanced mechanisms. These mechanisms are also denoted as options. However mobile-IP does not allow to negotiate the usage of these options offered by the tunnel technologies.

Perkins et al describe in 'IP Mobility Support for IPv4, Revised', IETF Standard-Working-Draft, Internet Engineering Taskforce, IETF, CH, Volume MIP4, number 2, to 20 October 2005, ISSN: 0000-0004 a method, wherein a tunnel type is adapted for tunneling internet protocol datagrams in a communications network from a home agent of the communications network to a point of attachment of a mobile node, wherein the point of attachment is a foreign agent, wherein the mobile node is associated with the home agent and wherein the IP datagrams are distinct for the mobile node. The method comprises the step of sending a first message that corresponds to a registration request message from the point of attachment to the home agent. The method furthermore comprises the step of receiving a second message which relates to a registration reply message from the home agent.

US 2006/045049 A1 discloses a method for performing a handover between a wireless local area network having an access router (AR) that supports an IP routing function and a mobile communication network including a packet data service node (PDSN) connected to a base station system (BSS), for supporting the IP routing function. An access terminal (AT) detects its movement from the wireless local area network to the mobile communication network, and exchanges information for tunneling between the AR and the PDSN, with the PDSN. The PDSN sets up a tunnel for packet delivery between the PDSN and the AR, and delivers packets to the AT through the tunnel. The AT furthermore sends before the tunnel is set up a tunnel request option and/or a tunnel packet buffering option and/or a tunnel ref tunneling option. The options might be accepted by the PDSN, wherein the tunnel is created when the options are accepted.

There is a need for an improved method of requesting the usage of options to be used in a tunnel type, for an improved communications network which supports the usage of options in a tunnel type, and for a communications network component for requesting a usage of the option.

### Summary of the invention

In one aspect of the invention, there is provided a method of requesting the usage of an option to be used in a tunnel type, wherein the tunnel type is adapted for tunneling internet protocol (IP) datagrams in a communications network from a home agent of the communications network to a point of attachment of a mobile node to the communications network, wherein the mobile node is associated with the home agent, wherein the IP-datagrams are destined for the mobile node. The method in accordance with the invention comprises the step of sending a first message from the point of attachment to the home agent, wherein the first message requests the usage of the option. The method further comprises the step of receiving a second message from the home agent, wherein in the second message the usage of the option is approved or denied by the home agent.

The request of the usage of the option for a tunnel type that is adapted for tunneling the IP-datagrams from the home agent to the point of attachment has the advantage that the options that are provided by the tunnel type can be actually used in mobile-IP. For instance the option of advanced data integrity by using sequence numbers or deeper flow classification in the home agent with the use of the GRE key can be requested if the underlying tunnel type refers to generic routing encapsulation (GRE).

In accordance with an embodiment of the invention, the usage of one or more options is requested by use of the first message. The usage of more than one option can therefore be requested by the foreign agent. This provides the advantage that the type of tunnel to be established can be configured or adapted by the foreign agent to a great extent.

In accordance with an embodiment of the invention, the point of attachment hosts the care of address of the mobile node in accordance with the mobile internet protocol (MIP).

In accordance with an embodiment of the invention, the mobile node sends a registration request message to the home agent, wherein the tunnel type is specified in the registration request message. The method in accordance with the invention further comprises the step of receiving the registration request message by the point of attachment and the step of generating the first message by adding an extension to the registration request message, wherein the option is specified in the extension, and wherein the option relates to the tunnel type. As mentioned already in the introductory part, the mobile node sends a registration request message to the home agent in order to inform the home agent about its actual care of address. The registration request message is also used by the mobile node in order to specify a tunnel type that is to be used for further tunneling the above mentioned IP-datagrams towards the mobile node. The registration request message is received by the point of attachment which can be depending on the host of the care of address, either the mobile node itself or the foreign agent. The first message is then generated by adding an extension to the registration request message. The first message therefore corresponds to the registration request message plus the extension. The option to be used with the tunnel type is such that it relates to the tunnel type already specified in the registration request message.

In accordance with an embodiment of the invention, the second message comprises a registration response message, wherein the registration response message is generated by the home agent in response to the reception of the registration request message. The home agent informs the mobile node by use of the registration request message about the reception of the registration response message. The second message can therefore be generated from the registration response message by adding an extension to the registration response message in which the usage of the option is approved or denied.

In accordance with an embodiment of the invention, the point of attachment corresponds to the end point of a tunnel used for tunneling the IP-datagrams, wherein the end point corresponds either to the foreign agent of the communications network or to the mobile node, wherein the foreign agent provides a link between the mobile node and the home agent. Thus, as already mentioned above, the point of attachment can refer to the foreign agent that serves the mobile node when it is located in the foreign network or it can refer to the mobile node itself when the care of address of the mobile node is co-located with the primary IP address of the mobile node.

In accordance with an embodiment of the invention, the communications network is an IP communications network and the IP communications network is compatible with mobile-IP.

In accordance with an embodiment of the invention, the tunnel type relates to the options already made available by MIP which are IP encapsulation within IP, minimal encapsulation within IP, and generic routing encapsulation (GRE), as well as to other alternatives that may be added in the future such as multiple protocol label switching (MPLS), or IP security (IPSEC).

In a second aspect, the invention relates to a method of requesting the usage of an option in a tunnel type, wherein the tunnel type is adapted for tunneling internet protocol (IP) datagrams in a communications network from a home agent of the communications network to a point of attachment of a mobile node to the communications network, wherein the mobile node is associated with the home agent, and wherein the IP-datagrams are destined for the mobile node. The method in accordance with the invention comprises the step of receiving a first message from the point of attachment, wherein the usage of the option in the tunnel type is requested. In a second step, the method comprises verifying if the option can be used in the tunnel type. Then a second message is sent to the point of attachment, wherein the usage of the option is approved if the option can be used with the tunnel type or wherein the usage of the option is denied if the option cannot be used within the tunnel type. In a further step the option is used for tunneling the IP-datagrams to the point of attachment if the option is indeed provided by the tunnel type and implemented in the home agent.

In a third aspect, the invention relates to a communications network that comprises the home agent and the mobile node, wherein the mobile node is associated with the home agent, wherein the mobile node is attached via a point of attachment to the communications network, and wherein a tunnel type is adapted for tunneling IP-datagrams for the mobile node from the home agent to the point of attachment. The communications network further comprises means for sending a first message from the point of attachment to the home agent, wherein the first message requests the usage of an option within the tunnel type. The communications network further comprises means for receiving the first message from the point of attachment and means for verifying if the option is provided by the tunnel type and implemented in the home agent. The communications network further comprises means for sending a second message to the point of attachment, wherein the usage of the option is approved if the option is provided by the tunnel type and implemented by the home agent, or wherein the usage of the option is denied if the option is not provided by the tunnel type or can be implemented by the home agent. The communications network moreover comprises means for using the option for tunneling the IP-datagrams to the point of attachment and means for receiving the second message.

In a fourth aspect the invention relates to a communications network component for requesting the usage of an option in a tunnel type, wherein the tunnel type is adapted for tunneling internet protocol datagrams in a communications network from a home agent of the communications network to the communications network component, wherein the mobile node is associated with the home agent, and wherein the IP-datagrams are destined for the mobile node. The component comprises means for sending a first message from the point of attachment to the home agent, wherein the usage of the option is requested by said first message. The component further comprises means for receiving a second message from the home agent, wherein the usage of the option is approved or denied by the home agent via said second message.

In accordance with an embodiment of the invention, the communication network component relates to the point of attachment of the mobile node to the communications network, wherein the point of attachment relates either to the mobile node or to a foreign agent, wherein the foreign agent provides a link between the mobile node and the home agent. Thus the functionality of the communications network component as described above is implemented in the mobile node or in the foreign agent serving the mobile node.

In a fifth aspect, the invention relates to a home agent of a communications network. The home agent comprises means for receiving a first message from a point of attachment of a mobile node to the communications network, wherein the mobile node is associated to the home agent, wherein the usage of an option in a tunnel type is requested, wherein the tunnel type is employed for tunneling internet protocol datagrams in the communications network from the home agent to the point of attachment. The home agent further comprises means for verifying if the option is provided by the tunnel type and supported by the home agent. The home agent has also means for sending a second message to the point of attachment. The home agent also comprises means for using the option for tunneling the IP-datagrams.

In further aspects, the invention relates to computer program products adapted to perform the methods as mentioned above.

The aspects of the invention described above will become even more apparent from and elucidated with reference to the embodiments described hereinafter.

The present invention defines a method according to claim 1, a communications network according to claim 4 and a communications network component according to claim 5. Further embodiments are set forth in the dependent claims 2 and 3.

### Brief description of the drawings

In the following preferred embodiments of the invention will be described in greater detail by way of example only making reference to the drawings in which:
- Figure 1: shows a communications network serving a mobile node,
- Figure 2: shows a flow diagram illustrating basic steps performed by a method in accordance with the invention, and
- Figure 3: shows another flow diagram illustrating basic steps performed by a method in accordance with the invention.

### Detailed description

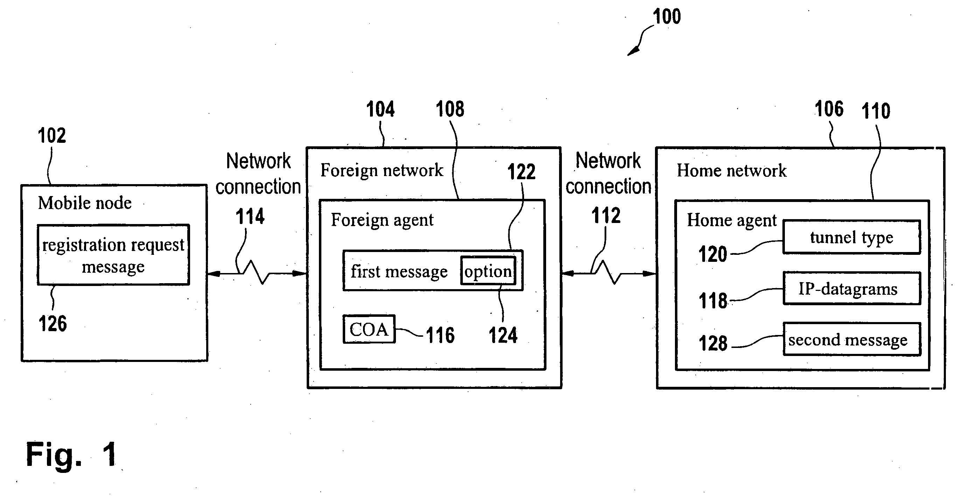

Fig. 1 shows a block diagram of a communications network 100 serving a mobile node 102. The communications network 100 is an IP network that provides support for mobile-IP. The network 100 comprises a foreign network 104 and a home network 106. The home network 106 and the foreign network 104 are connected via the network connection 112 which is a connection over the internet.

The mobile node 102 is connected via a network connection 114 to the foreign network 104. The network connection 114 can be a wireless connection, a line based connection, or a mixture of both. The mobile node 102 is associated with the home network 106 as its primary IP address (not depicted in fig. 1) relates to the home network 106.

The home network 106 further provides a home agent 110 which provides services to the mobile node 102. Similarly, the foreign agent 104 comprises a foreign agent 108 that provides services to the mobile node 102 when the mobile node is connected via the foreign network 104 to the home network 106. The foreign agent 108 and the home agent 110 are typically hosted by routers that link the foreign network 104, or the home network 106, respectively, to other networks. For example the foreign agent 108 could be located on a router (hot shown) that links the foreign network 104 to the home network 106, and the home agent 110 could be located on a router that links the home network 106, e.g., via the network connection 112, to the foreign network 104.

The foreign agent 108 and the home agent 110 can for example be computer program products that are stored permanently on a storage device of the corresponding routers and that are loaded, e.g., during the start-up of the routers, into a microprocessor of the routers.

The mobile node 102 is addressable in the communications network 100 by use of its care of address (COA) 116. The care of address 116 can be hosted by the foreign agent 108. A correspondent node (not shown in fig. 1) sends IP-datagrams 118 to the mobile node 102 by use of the primary IP address of the mobile node. The IP-datagrams 118 are therefore intercepted by the home agent 110 and further routed to the care of address 116 of the mobile node 102. For this, the IP-datagrams 118 are tunneled to the point of attachment of the mobile node 102 which corresponds to the foreign agent 108 for the above mentioned case when the foreign agent 108 hosts the care of address 116. A tunnel type 120 as for example GRE might by then used for tunneling the IP-datagrams 118.

The mobile node 102 sends according to the mobile internet protocol standard a registration request message 126 in order to inform the home agent 110 about its actual care of address 116 and in order to specify the tunnel type 120 that is to be employed when the IP-datagrams 118 are to be tunneled to the point of attachment of the mobile node.

In operation, the foreign agent 108 sends a first message 122 to the home agent 110 by which the usage of an option 124 within the tunnel type 120 is requested. The first message 122 is received by the home agent 110 which then checks if the option 124 is indeed provided by the tunnel type 120 and supported by the home agent 110. If this is the case, the option 124 is used within the tunnel type 120 when the IP-datagrams 118 destined for the mobile node 102 are to be tunneled to the foreign agent 108. The home agent 110 further sends a second message 128 in response to the reception of the first message 122 in which the usage of the option 124 in the tunnel type 120 is denied or verified.

When the foreign agent 108 hosts the care of address 116 of the mobile node 102, then the registration request message 126 is processed via the foreign agent 108. The foreign agent 108 can thus add an extension to the registration request message 126 in which the option 124 which refers to the tunnel type 120 is specified. The first message 122 can therefore correspond to the extended registration request message 126 which is then send to the home agent 106. This provides the advantage that the tunnel type 120 and the option 124 to be used in the tunnel type are transmitted to the home agent 110 in a single message. Further the option 124 can be adapted to relate to the tunnel type 120 as the foreign agent 108 can read out the tunnel type 120 specified in the registration request message 126 and select the option 124 accordingly. The foreign agent 108 might for example be able to access a database in which it is specified which option or which options are to be selected for a given tunnel type. The specifications in the database can be made by a supervisor / administrator of the foreign network 104.

The care of address 116 can also be hosted directly by the mobile node 102. In this case, the first message 122 that might correspond to the extended registration request message 126 is sent from the mobile node 102 to the home agent 110 and the second message 126 is received by the mobile node 102. The mobile node 102 represents then the end point of a tunnel that is to be established when the IP-datagrams 118 are to be sent from the home agent 110 to the mobile node 102 by use of the tunnel type 120 in which the option 124 is employed.

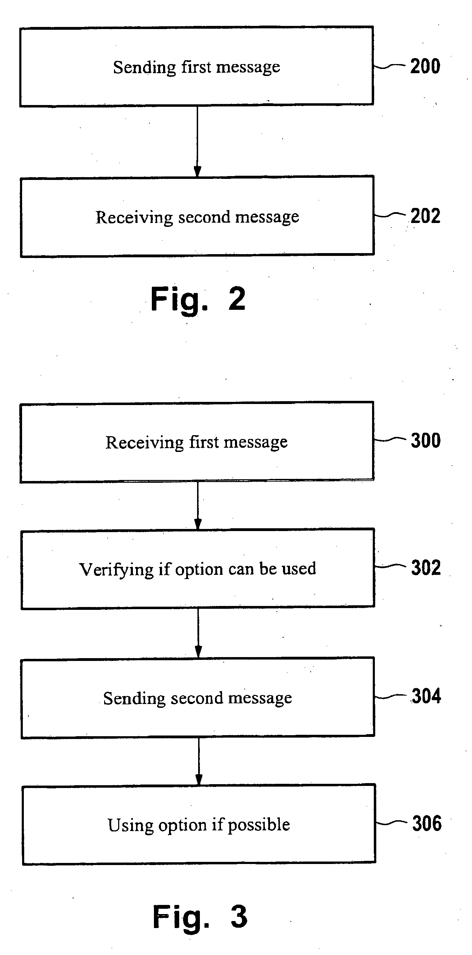

Fig. 2 shows a flow diagram illustrating basic steps performed by a method of requesting the usage of an option in a tunnel type, wherein the tunnel type is adapted for tunneling internet protocol datagrams in a communications network from a home agent of the communications network to a point of attachment of the mobile node to the communications network, wherein the mobile node is associated with the home agent, and wherein the IP-datagrams are destined for the mobile node. In step 200 a first message is sent from the point of attachment to the home agent, wherein the usage of the option is requested via the first message. In step 202 a second message is received from the home agent, wherein in the second message the usage of the option is approved or denied by the home agent.

Fig. 3 shows another flow diagram of a method of requesting the usage of an option in the tunnel type, wherein the tunnel type is adapted for tunneling IP-datagrams in a communications network, in particular an IP-network, from a home agent to a point of attachment of a mobile node to the communications network. The home agent is a component of the IP-network, the mobile node is associated with the home agent, and the IP-datagrams are destined for the mobile node. In step 300 a first message is received. The first message has been sent from the point of attachment and the usage of an option is requested from the point of attachment by said first message. In step 302 it is verified if the option is provided by the tunnel type and supported by the home agent. In step 304, a second message is sent to the point of attachment, wherein the usage of the option is approved, if the option is provided by the tunnel type and supported by the home agent or wherein the usage of the option is denied if the option is not provided or not supported. In step 306 the option is used in the tunnel type that is employed for tunneling the IP-datagrams to the point of attachment if the option is indeed provided by the tunnel type and supported by the home agent.

**List of Reference Numerals**

| | |
|---|---|
| 100 | Communications network |
| 102 | Mobile node |
| 104 | Foreign network |
| 106 | Home network |
| 108 | Foreign agent |
| 110 | Home agent |
| 112 | Network connection |
| 114 | Network connection |
| 116 | Care of address |
| 118 | IP-datagrams |
| 120 | Tunnel type |
| 122 | First message |
| 124 | Option |
| 126 | Registration request message |
| 128 | Second message |

## Claims

1. A method of requesting the usage of an option (124) in a tunnel type (120), said tunnel type being adapted for tunneling internet protocol datagrams (118) in a communications network (100) from a home agent (110) of said communications network to a point of attachment of a mobile node (102), the point of attachment relating to a foreign agent (108) of the network, the foreign agent providing a link between the mobile node and the home agent, said mobile node being associated with the home agent, said IP-datagrams being destined for the mobile node, said method comprising:
- receiving a registration request message (126) from the mobile node by the point of attachment, the registration request message specifying a tunnel type;
- generating a first message (122) by adding an extension to the registration request message, wherein said option is specified in said extension, and wherein said option relates to the tunnel type specified in the registration request message;
- sending the first message (122) from the point of attachment to the home agent;
- receiving a second message (128) from said home agent, wherein in said second message the usage of said option (124) in said tunnel type (120) is approved or denied by said home agent.

2. The method of claim 1, wherein the point of attachment (102, 108) hosts the care of address (COA) (116) of the mobile node (102) in accordance with the mobile internet protocol standard.

3. The method of claim 1, wherein the point of attachment corresponds to the end point of the tunnel used for tunneling the IP-datagrams (118), wherein said end point corresponds to the foreign agent (108) of the communications network.

4. A communications network comprising:
- a home agent (110) and a mobile node (102), said mobile node (102) being associated with the home agent, said mobile node being attached via a point of attachment to the communications network (100), wherein a tunnel type (120) is adapted for tunneling I P-datagrams (118) destined for the mobile node from the home agent to a point of attachment of the mobile node, wherein the point of attachment relates to a foreign agent (108) of the network;
- means for receiving a registration request message (126) from the mobile node, the registration request message specifying a tunnel type;
- means for generating a first message (122) by adding an extension to the registration request message, wherein said option is specified in said extension, and wherein said option relates to the tunnel type specified in the registration request message,
- means for sending the first message from the foreign agent to the home agent;
- means for receiving the first message;
- means for verifying if the option (124) is provided by the tunnel type (120) and supported by the home agent (110);
- means for sending a second message (128) from the home agent to the foreign agent, wherein the usage of the option is approved if the option is provided by the tunnel type and supported by the home agent or wherein the usage of the option is denied if the option is not provided or supported;
- means for using the option in the tunnel type (120) adapted for tunneling the IP-datagrams (118) to the point of attachment if the option is provided by the tunnel type and supported by the home agent (110);
- means for receiving the second message.

5. A communications network component for requesting the usage of an option (124) in a tunnel type (120), wherein the tunnel type is adapted for tunneling internet protocol datagrams (118) in a communications network (100) from a home agent (110) of the communication network to the communications network component (108, 102), wherein the mobile node is associated with the home agent, and wherein the IP-datagrams are destined for the mobile node, and wherein said component comprises:
- means for receiving a registration request message (126) from the mobile node, the registration request message specifying a tunnel type;
- means for generating a first message (122) by adding an extension to the registration request message, wherein said option is specified in said extension, and wherein said option relates to the tunnel type specified in the registration request message;
- means for sending the first message (122) to the home agent;
- means for receiving a second message (128) from the home agent, wherein the usage of the option is approved or denied by the second message.

## Patentansprüche

1. Verfahren für das Anfordern der Benutzung einer Option (124) in einem Tunneltyp (120), wobei besagter Tunneltyp ausgelegt ist für das Tunneln von Internetprotokoll-Datagrammen (118) in einem Kommunikationsnetzwerk (100) von einem Heimagenten (110) besagten Kommunikationsnetzwerks zu einem Anbindungspunkt eines mobilen Knotens (102), wobei der Anbindungspunkt mit einem Fremdagenten (108) des Netzwerks in Verbindung steht, wobei der Fremdagent eine Verbindung zwischen dem mobilen Knoten und dem Heimagenten bereitstellt, wobei besagter mobiler Knoten mit dem Heimagenten assoziiert ist, wobei besagte IP-Datagramme an den mobilen Knoten gerichtet sind, wobei besagtes Verfahren umfasst:
- den Empfang einer Registrierungsanforderungsnachricht (126) von dem Mobilknoten am Anbindungspunkt, wobei die Registrierungsanforderungsnachricht einen Tunneltyp spezifiziert;
- das Generieren einer ersten Nachricht (122) durch das Hinzufügen einer Erweiterung an die Registrierungsanforderungsnachricht, wobei besagte Option in besagter Erweiterung spezifiziert wird und wobei besagte Option sich auf den in der Registrierungsanforderungsnachricht spezifizierten Tunneltyp bezieht;
- das Senden der ersten Nachricht (122) vom Anbindungspunkt an den Heimagenten;
- den Empfang einer zweiten Nachricht (128) von besagtem Heimagenten, wobei in besagter zweiter Nachricht die Benutzung besagter Option (124) in besagtem Tunneltyp (120) von besagtem Heimagenten genehmigt oder verweigert wird.

2. Das Verfahren nach Anspruch 1, wobei der Anbindungspunkt (102, 108) Care-of-Adresse (COA, 116) des mobilen Knotens (102) gemäß dem mobilen Internetprotokoll-Standard hostet.

3. Das Verfahren nach Anspruch 1, wobei der Anbindungspunkt dem Endpunkt des Tunnels entspricht, der für das Tunneln des IP-Datagramms (118) benutzt wird, wobei besagter Endpunkt dem Fremdagenten (108) des Kommunikationsnetzwerks entspricht.

4. Ein Kommunikationsnetzwerk, umfassend:
- einen Heimagenten (110) und einen mit dem Heimagenten assoziierten, mobilen Knoten (102), wobei besagter mobiler Knoten über einen Anbindungspunkt an das Kommunikationsnetzwerk (100) angebunden ist, wobei ein Tunneltyp (120) ausgelegt ist für das Tunneln von an den mobilen Knoten gerichteten IP-Datagrammen (118) von dem Heimagenten an einen Anbindungspunkt des mobilen Knotens , wobei der Anbindungspunkt mit einem Fremdagenten (108) des Netzwerks in Verbindung steht;
- Mittel für den Empfang einer Registrierungsanforderungsnachricht (126) von dem Mobilknoten, wobei die Registrierungsanforderungsnachricht einen Tunneltyp spezifiziert;
- Mittel für das Generieren einer ersten Nachricht (122) durch das Hinzufügen einer Erweiterung an die Registrierungsanforderungsnachricht, wobei besagte Option in besagter Erweiterung spezifiziert wird und wobei besagte Option sich auf den in der Registrierungsanforderungsnachricht spezifizierten Tunneltyp bezieht;
- Mittel für das Senden einer ersten Nachricht von dem Fremdagenten an den Heimagenten;
- Mittel für den Empfang der ersten Nachricht;
- Mittel für das Verifizieren, ob die Option (124) von dem Tunneltyp (120) bereitgestellt und vom Heimagenten (110) unterstützt wird;
- Mittel für das Senden einer zweiten Nachricht (128) von dem Heimagenten an den Fremdagenten, wobei die Benutzung der Option genehmigt wird, wenn die Option von dem Tunneltyp bereitgestellt und von dem Heimagenten unterstützt wird, oder wobei die Benutzung der Option verweigert wird, wenn die Option nicht bereitgestellt oder unterstützt wird;
- Mittel für das Benutzen der Option in dem Tunneltyp (120), der für das Tunneln des IP-Datagramms (118) zum Anbindungspunkt ausgelegt ist, wenn die Option von dem Tunneltyp bereitgestellt und von dem Heimagenten (110) unterstützt wird;
- Mittel für den Empfang der zweiten Nachricht.

5. Eine Kommunikationsnetzwerkskomponente zum Anfordern der Benutzung einer Option (124) in einem Tunneltyp (120), wobei besagter Tunneltyp ausgelegt ist für das Tunneln von Internetprotokoll-Datagrammen (118) in einem Kommunikationsnetzwerk (100) von einem Heimagenten (110) besagten Kommunikationsnetzwerks zu der Kommunikationsnetzwerkskomponente (108, 102), wobei der mobile Knoten mit dem Heimagenten assoziiert ist und wobei die IP-Datagramme für den mobilen Knoten bestimmt sind, und wobei besagte Komponente umfasst:
- Mittel für den Empfang einer Registrierungsanforderungsnachricht (126) von dem Mobilknoten, wobei die Registrierungsanforderungsnachricht einen Tunneltyp spezifiziert;
- Mittel für das Generieren einer ersten Nachricht (122) durch das Hinzufügen einer Erweiterung an die Registrierungsanforderungsnachricht, wobei besagte Option in besagter Erweiterung spezifiziert wird und wobei besagte Option sich auf den in der Registrierungsanforderungsnachricht spezifizierten Tunneltyp bezieht;
- Mittel für das Senden einer ersten Nachricht (122) an den Heimagenten;
- Mittel für das Empfangen der zweiten Nachricht (128) von dem Heimagenten, wobei die Benutzung der Option von der zweiten Nachricht genehmigt oder verweigert wird.

## Revendications

1. Procédé de demande de l'utilisation d'une option (124) dans un type de tunnel (120), ledit type de tunnel étant adapté pour tunnelliser des datagrammes de protocole Internet (118) dans un réseau de communications (100) d'un agent nominal (110) dudit réseau de communications à un point de rattachement d'un noeud mobile (102), le point de rattachement reliant à un agent étranger (108) du réseau, l'agent étranger fournissant une liaison entre le noeud mobile et l'agent nominal, ledit noeud mobile étant associé à l'agent nominal, lesdits datagrammes IP étant destinés au noeud mobile, ledit procédé comprenant les étapes suivantes :
- recevoir un message de demande d'enregistrement (126) en provenance du noeud mobile par le point de rattachement, le message de demande d'enregistrement spécifiant un type de tunnel ;
- générer un premier message (122) en ajoutant une extension au message de demande d'enregistrement, ladite option étant spécifiée dans ladite extension, et ladite option se rapportant au type de tunnel spécifié dans le message de demande d'enregistrement ;
- envoyer le premier message (122) du point de rattachement à l'agent nominal ;
- recevoir un second message (128) en provenance dudit agent nominal, dans ledit second message l'utilisation de ladite option (124) dans ledit type de tunnel (120) étant acceptée ou refusée par ledit agent nominal.

2. Procédé selon la revendication 1, dans lequel le point de rattachement (102, 108) héberge l'adresse aux bons soins de (COA) (116) du noeud mobile (102) conformément à la norme de protocole Internet mobile.

3. Procédé selon la revendication 1, dans lequel le point de rattachement correspond au point d'extrémité du tunnel utilisé pour tunnelliser les datagrammes IP (118), ledit point d'extrémité correspondant à l'agent étranger (108) du réseau de communications.

4. Réseau de communications comprenant :
- un agent nominal (110) et un noeud mobile (102), ledit noeud mobile (102) étant associé à l'agent nominal, ledit noeud mobile étant rattaché via un point de rattachement au réseau de communications (100), un type de tunnel (120) étant adapté pour tunnelliser des datagrammes IP (118) destinés au noeud mobile de l'agent nominal à un point de rattachement du noeud mobile, le point de rattachement reliant à un agent étranger (108) du réseau ;
- des moyens pour recevoir un message de demande d'enregistrement (126) en provenance du noeud mobile, le message de demande d'enregistrement spécifiant un type de tunnel ;
- des moyens pour générer un premier message (122) en ajoutant une extension au message de demande d'enregistrement, ladite option étant spécifiée dans ladite extension, et ladite option se rapportant au type de tunnel spécifié dans le message de demande d'enregistrement ;
- des moyens pour envoyer le premier message de l'agent étranger à l'agent nominal ;
- des moyens pour recevoir le premier message ;
- des moyens pour vérifier si l'option (124) est fournie par le type de tunnel (120) et supportée par l'agent nominal (110) ;
- des moyens pour envoyer un second message (128) de l'agent nominal à l'agent étranger, l'utilisation de l'option étant acceptée si l'option est fournie par le type de tunnel et supportée par l'agent nominal ou l'utilisation de l'option étant refusée si l'option n'est pas fournie ou supportée ;
- des moyens pour utiliser l'option dans le type de tunnel (120) adapté pour tunnelliser les datagrammes IP (118) vers le point de rattachement si l'option est fournie par le type de tunnel et supportée par l'agent nominal (110) ;
- des moyens pour recevoir le second message.

5. Composant de réseau de communications pour demander l'utilisation d'une option (124) dans un type de tunnel (120), le type de tunnel étant adapté pour tunnelliser des datagrammes de protocole Internet (118) dans un réseau de communications (100) d'un agent nominal (110) du réseau de communications au composant de réseau de communications (108, 102), le noeud mobile étant associé à l'agent nominal, et les datagrammes IP étant destinés au noeud mobile, et ledit composant comprenant :
- des moyens pour recevoir un message de demande d'enregistrement (126) en provenance du noeud mobile, le message de demande d'enregistrement spécifiant un type de tunnel ;
- des moyens pour générer un premier message (122) en ajoutant une extension au message de demande d'enregistrement, ladite option étant spécifiée dans ladite extension, et ladite option se rapportant au type de tunnel spécifié dans le message de demande d'enregistrement ;
- des moyens pour envoyer le premier message (122) à l'agent nominal ;
- des moyens pour recevoir un second message (128) en provenance de l'agent nominal, l'utilisation de l'option étant acceptée ou refusée par le second message.
